Europäisches Patentamt

European Patent Office

Office européen des brevets

(19)

(11) **EP 0 591 813 B1**

(12) **FASCICULE DE BREVET EUROPEEN**

(45) Date de publication et mention
de la délivrance du brevet:
**27.01.1999 Bulletin 1999/04**

(51) Int Cl.⁶: **H04L 27/20**

(21) Numéro de dépôt: **93115591.5**

(22) Date de dépôt: **28.09.1993**

(54) **Modulateur à phase continue**

Phasenkontinuierlicher Modulator

Continuous phase modulator

(84) Etats contractants désignés:
**CH DE ES FR GB IT LI NL**

(30) Priorité: **02.10.1992 FR 9211939**

(43) Date de publication de la demande:
**13.04.1994 Bulletin 1994/15**

(73) Titulaire: **C.S.E.M. CENTRE SUISSE
D'ELECTRONIQUE ET DE MICROTECHNIQUE
SA
2007 Neuchâtel (CH)**

(72) Inventeurs:
• **Pardoen, Matthijs D.**
**CH-2074 Marin (CH)**
• **Gerrits, John F.M.**
**CH-2016 Cortaillod (CH)**

(74) Mandataire: **de Montmollin, Henri et al
ICB
Ingénieurs Conseils en Brevets SA
Rue des Sors 7
2074 Marin (CH)**

(56) Documents cités:
**EP-A- 0 169 612          EP-A- 0 377 180
WO-A-91/19360          US-A- 4 748 641
US-A- 4 897 620**

## Description

La présente invention concerne les systèmes de transmission d'information à l'aide de signaux à codage par déplacement de fréquence (ci-après "signaux CDF" par analogie avec le terme anglais "FSK" signifiant "Frequency Shift Keying").

L'invention se rapporte, plus précisément, à un modulateur permettant d'engendrer un signal porteur contenant l'information à transmettre sous la forme du codage par déplacement de fréquence.

Il est déjà connu que si un tel modulateur fonctionne selon une méthode particulière de transmission par CDF, méthode dite "à phase continue", on obtient des avantages appréciables. En particulier, la méthode "à phase continue" permet d'obtenir une réduction des lobes latérales dans le spectre du signal émis, par rapport un modulateur dont la méthode de fonctionnement n'est pas à phase continue. Il en résulte une meilleure efficacité spectrale du signal, ce qui signifie que l'on peut transmettre plus d'information dans la même bande passante.

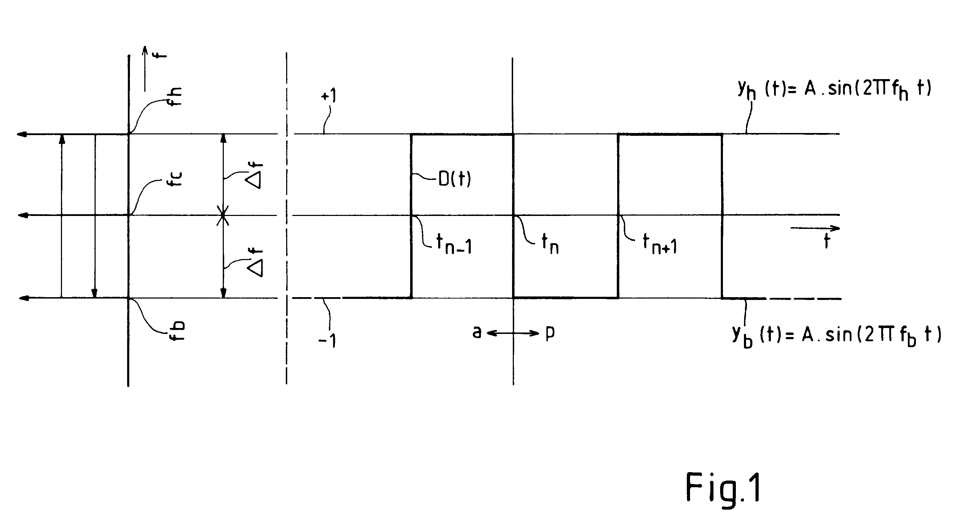

On sait également (voir l'illustration de la figure 1 des dessins annexés) que la transmission d'information par CDF implique l'émission d'une fréquence centrale fictive $f_c$ de part et d'autre de laquelle se situent deux fréquences réellement émises $f_h$ et $f_b$ distantes de la fréquence centrale $f_c$ d'une valeur $\Delta f$ et qui sont émises respectivement lorsque l'information binaire a la valeur supérieure +1 et la valeur inférieure -1.

Pour obtenir ce résultat, le modulateur CDF doit pouvoir engendrer deux signaux en fonction du niveau du signal d'information à transmettre, signaux dont les expressions mathématiques sont respectivement les suivantes :

$$y_h(t) = A.\sin(2\pi\, f_h \cdot t) \text{ pour } D(t) = +1,$$

et

$$y_b(t) = A.\sin(2\pi f_b \cdot t) \text{ pour } D(t) = -1$$

Ces deux expressions peuvent s'écrire respectivement:

$$y_h(t) = A.[+\sin(2\pi\Delta f.t).\cos(2\pi f_c.t) + \cos(2\pi\Delta f.t).\sin(2\pi f_c.t)]$$

et

$$y_b(t) = A.[-\sin(2\pi\Delta f.t).\cos(2\pi f_c.t) + \cos(2\pi\Delta f.t).\sin(2\pi f_c.t)]$$

On remarque donc que le passage de $f_h$ à $f_b$ ou inversement, en travaillant avec une fréquence centrale $f_c = (f_b + f_h)/2$ et une fréquence de modulation $\Delta f = (f_h - f_b)/2$, peut être obtenu par le changement de signe devant le terme $\sin(2\pi\Delta f.t)$.

Ainsi, le modulateur pourra fonctionner selon le principe de la fréquence intermédiaire zéro et doit comprendre, à cet effet, des moyens pour mélanger des signaux sinus et cosinus de la fréquence centrale avec des signaux sinus et cosinus de la fréquence de modulation, le signal de modulation sinus devant être affecté d'un déphasage d'un angle $\pi$, pour chaque apparition d'une transition du signal d'information binaire D(t). Le modulateur doit également comprendre des moyens additionneurs permettant de faire la somme des deux termes des signaux $y_b(t)$ et $y_h(t)$.

Il est à noter que les facteurs contenant la fréquence de modulation $\Delta f$ des deux expressions pour les signaux y sont appelés I(t) et Q(t) qui sont des signaux en quadrature de la forme:

$$I(t) = D(t)\sin(2\pi\Delta f.t)$$

et

$$Q(t) = \cos(2\pi\Delta f.t).$$

L'inversion de phase (le déphasage sur l'angle $\pi$) intervenant sur le signal I(t) lors de l'apparition de la transition du signal D(t) implique une discontinuité dans ce signal, ce qui revient dans le signal y(t) obtenu à la sortie du modulateur à un saut de phase. Ceci va à l'encontre de ce que l'on se propose d'obtenir pour atteindre l'objectif indiqué ci-dessus, c'est-à-dire un signal porteur modulé à phase continue.

Pour obtenir la continuité de phase, on peut synchroniser les transitions du signal utile binaire D(t) avec les passages par zéro du signal de sortie à codage CDF.

Une telle méthode, fonctionnant avec une fréquence du signal porteur de 1500 Hz, a déjà été proposée dans un article paru dans la revue IEEE, Journal of Solid-State Circuits, par Bedrich J. Hosticka et al, Vol. Sc 19, no 3 de juin 1984. La réalisation d'un circuit permettant une telle synchronisation ne pose pas de problèmes particuliers. Une telle méthode est également connue du document EP-A-0 169 612.

Cependant, dans de nombreuses applications telles que dans la majorité des systèmes de télécommunication professionnels, la fréquence du signal porteur est nettement plus élevée (par exemple de l'ordre de 100 MHz). La méthode de synchronisation devient alors prohibitive en raison de l'augmentation considérable de la complexité des circuits nécessaires pour le modulateur.

Cet inconvénient de la méthode de synchronisation peut être atténué, si on utilise une fréquence intermédiaire zéro, comme cela est envisagé dans la présente invention. En effet, il est alors possible de synchroniser les transitions du signal binaire utile D(t) avec les passages par zéro des signaux I et Q à une fréquence égale à la déviation de fréquence $\Delta f$.

Cette solution présente cependant encore un inconvénient qui consiste, car elle implique une limitation la densité de l'information que l'on peut moduler sur le signal porteur. Cet inconvénient est surtout important, lorsque la déviation de fréquence $\Delta f$ de celui-ci est faible.

L'invention vise à créer un modulateur du type CDF à phase continue et à une fréquence égale à la déviation de fréquence $\Delta f$ au lieu de la fréquence porteuse $f_c$, ce modulateur n'ayant pas besoin d'une méthode de synchronisation susceptible de limiter la densité de l'information pouvant être transmise.

L'invention a donc pour objet un modulateur destiné à être utilisé dans un émetteur d'un signal porteur de transmission d'information dans lequel l'information à transmettre se présente sous forme codée par déplacement de fréquence, ledit signal porteur étant centré sur une fréquence fictive $f_c$, de part et d'autre de laquelle sont respectivement émises deux fréquences réelles distantes de la fréquence centrale $f_c$ d'une fréquence $\Delta f$, suivant que l'information binaire prend une valeur haute ou une valeur basse, ledit modulateur comprenant:

- des premiers moyens générateurs pour engendrer un premier signal porteur de la forme $\sin(2\pi f_c t)$ et un second signal porteur de la forme $\cos(2\pi f_c t)$,
- des seconds moyens générateurs pour engendrer, respectivement en fonction du niveau de l'information binaire à transmettre, un premier signal de modulation I(t) de la forme $\sin(2\pi\Delta ft)$ et un second signal de modulation Q(t) de la forme $\cos(2\pi\Delta ft)$
- des premiers moyens de multiplication pour mélanger le premier signal porteur et le premier signal de modulation,
- des seconds moyens de multiplication pour mélanger le second signal porteur et le second signal de modulation, et
- des moyens pour additionner les signaux de sortie desdits moyens de multiplication et engendrer ainsi ledit signal à transmettre,
  ledit modulateur étant caractérisé en ce que lesdits seconds moyens générateurs comprennent:
- des premiers moyens de déphasage pour, à chaque transition de ladite information binaire, modifier d'une valeur $k\pi$ la phase dudit premier signal de modulation, k étant un nombre impair quelconque, et
- des seconds moyens de déphasage pour, simultanément à l'action desdits premiers moyens de déphasage et à chaque transition de ladite information binaire, changer le signe des arguments desdits premier et second signaux de modulation.

Il résulte de ces caractéristiques que les amplitudes respectives des deux signaux de modulation I(t) et Q(t) restent constantes juste avant et après chaque transition de l'information binaire ce qui a pour conséquence que le signal porteur modulé ne présente, au moment de chaque changement de fréquence dû à une transition de l'information binaire, aucune discontinuité de phase, et ce quel que soit l'instant d'apparition de la transition par rapport aux signaux de modulation I(t) et/ou Q(t).

D'autres caractéristiques et avantages de l'invention apparaîtront au cours de la description qui va suivre de plusieurs modes de réalisation de l'invention, description qui est donnée à titre d'exemple uniquement et faite en se référant aux dessins annexés sur lesquels:

la figure 1 représente un diagramme illustrant le principe de fonctionnement de la transmission d'information à l'aide de signaux CDF;
la figure 2 est un schéma simplifié d'un premier mode de réalisation d'un modulateur suivant l'invention fonctionnant en mode numérique;

la figure 3 est un diagramme montrant, en fonction du temps, certaines formes d'ondes apparaissant dans le modulateur de la figure 2;

la figure 4 représente graphiquement comment sont élaborées les données dans une mémoire ROM utilisée dans le modulateur de la figure 2;

la figure 5 montre graphiquement comment sont élaborées les données dans une autre mémoire ROM utilisée dans le modulateur de la figure 2;

la figure 6 représente un autre mode de réalisation du modulateur suivant l'invention fonctionnant en mode numérique;

la figure 7 montre des formes d'onde illustrant le fonctionnement du modulateur représenté à la figure 6;

la figure 8 représente encore un autre mode de réalisation du modulateur suivant l'invention qui a un fonctionnement analogique;

la figure 9 est un diagramme montrant certaines formes d'ondes apparaissant dans le modulateur de la figure 8.

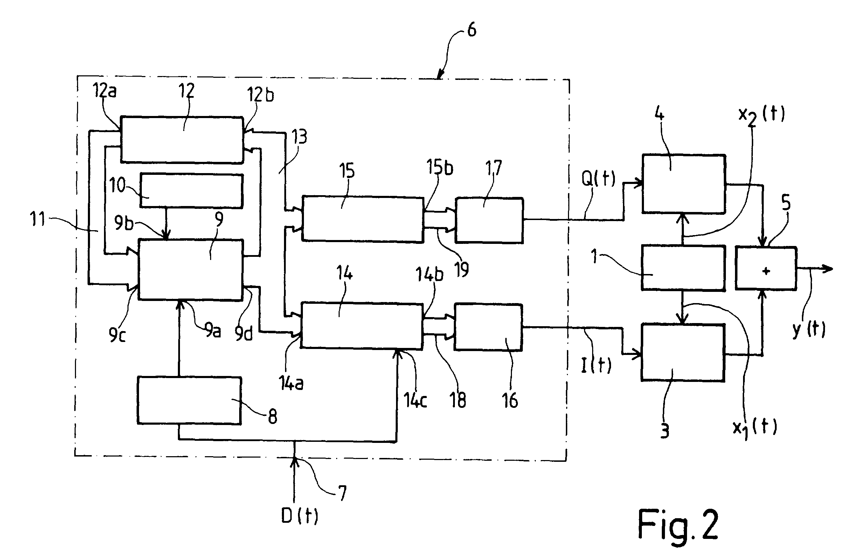

On va se référer maintenant à la figure 2 qui représente schématiquement une première version numérique d'un modulateur suivant l'invention.

Ce modulateur comprend un premier générateur 1 pour engendrer un signal $X_1(t)=\cos(2\pi f_c\,t)$ , $f_c$ étant la fréquence porteuse centrale du signal CDF à transmettre, et un second signal $X_2(t)=\sin(2\pi f_c\,t)$ en quadrature avec le signal $X_1(t)$.

Le générateur 1, comme d'ailleurs tous les autres circuits qui vont être décrits ci-après, sont conçus de façon classique et peuvent être réalisés par exemple sous la forme d'un circuit intégré CMOS, travail que l'homme de métier saura exécuter du moment qu'on lui enseigne les fonctions qui, selon la présente invention, doivent être mises en oeuvre.

Le générateur 1 est raccordé à deux mélangeurs 3 et 4 qui combinent avec les signaux $X_1(t)=\cos(2\pi f_c\cdot t)$ et $X_2(t)=\sin(2\pi f_c\cdot t)$ , respectivement deux signaux de modulation appelés signaux I et Q.

Les signaux de sortie des mélangeurs 3 et 4 sont appliqués à un additionneur 5 qui élabore un signal y(t) de la forme:

$$y(t) = I(t) \cos (2\pi f_c\cdot t) + Q(t) \sin (2\pi f_c\cdot t)$$

Les signaux I et Q sont engendrés dans un deuxième générateur 6 de signaux de modulation auquel est appliqué par une entrée 7 le signal binaire D(t) représentatif de l'information binaire à transmettre dans le signal y(t).

En généralisant à l'extrême les expressions pour les signaux I(t) et Q(t), on peut écrire:

$$I(t)=A[D(t)]\sin\{\alpha[t,D(t)]\}$$

et

$$Q(t)=B[D(t)]\cos\{\beta[t,D(t)]\}$$

dans lesquels D(t) représente l'information binaire qui est transmise à savoir un "+1" ou un "-1" binaire. La fréquence transmise pour D(t)=+1 sera de $f_c+\Delta f$ et pour D(t)=-1 , elle sera de $f_c-\Delta f$ (l'inverse pouvant naturellement être envisagé).

On remarque que l'amplitude A du terme sinus et l'amplitude B du terme cosinus sont des fonctions du signal utile D(t), et que l'argument $\alpha$ du sinus et $\beta$ du cosinus sont des fonctions du temps t de même que du signal utile d'information binaire D(t).

Dans le mode de réalisation de l'invention représenté à la figure 2, les fonctions A,B,$\alpha$ et $\beta$ ont les formes suivantes pour le cas stationnaire qui existe dès l'enclenchement du modulateur, jusqu'au moment de la première transition du signal d'information binaire D(t):

$$A(t)=D(t) \qquad \alpha(t,D(t)]=\alpha_o+2\pi\Delta ft$$

$$B(t)=1 \qquad \beta(t)=\beta_o+2\pi\Delta ft$$

dans lesquelles $\alpha_o=\beta_o$ signifient la phase au moment t=0.

Dans ces conditions, en admettant que $\alpha o = \beta o = 0$, le signal $y(t)$ prend la forme:

$$y_h(t) = \sin[2\pi(f_c + \Delta f)t] \quad \text{quand } D(t) = +1$$

et

$$y_b(t) = \sin[2\pi(f_c - \Delta f)t] \quad \text{quand } D(t) = -1$$

pour autant que

$$I(t) = D(t)\sin(2\pi\Delta ft)$$

et

$$Q(t) = \cos(2\pi\Delta ft)$$

ce qui peut s'écrire avec $\theta(t) = 2\pi\Delta ft$:

$$I(t) = D(t)\sin[\theta(t)]$$

et

$$Q(t) = \cos[\theta(t)],$$

$\theta$ pouvant varier entre $-\pi$ et $+\pi$.

Par conséquent, le rôle du deuxième générateur 6 de signaux de modulation consiste à engendrer les signaux $I(t)$ et $Q(t)$, avec comme condition particulière, réalisée selon la présente invention, qu'aucune transition du signal utile $D(t)$ n'entraîne un saut de phase dans le signal de sortie $y(t)$.

Pour obtenir ce résultat, le générateur 6 est conçu de telle façon que ni le signal $I(t)$ ni le signal $Q(t)$ ne présente une discontinuité pour toute transition du signal $D(t)$.

Comme représenté sur la figure 1, on désigne le moment de la n-ième transition du signal d'information binaire par $t_n$, la valeur des variables juste avant la n-ième transition par l'indice "a" (pour antérieur) et la valeur des variables juste après la n-ième transition par l'indice "p" (pour postérieur).

Selon l'invention, le générateur 6 élabore à chaque transition du signal $D(t)$ des signaux $I(t)$ et $Q(t)$ tels que:

$$I_{na} = I_{np} \text{ et } Q_{na} = Q_{np}.$$

Ces deux égalités sont satisfaites, selon l'invention, à deux conditions, à savoir:

- la fonction $I(t)$ subit un déphasage de $k\pi$ (k étant un nombre impair quelconque), ce qui revient à inverser le signe du signal $I(t)$.
- les arguments des deux fonctions $I(t)$ et $Q(t)$ subissent une inversion commune telle que $\alpha_{na} = -\alpha_{np}$ et $\beta_{na} = -\beta_{np}$ (avec $\alpha = \beta = \theta$);

Ces deux conditions sont mises en oeuvre dans le montage numérique du générateur 6 représenté à titre d'exemple à la figure 2.

Ce générateur 6 comprend tout d'abord un détecteur 8 des transitions du signal $D(t)$ qui lui est appliqué par l'intermédiaire de l'entrée 7.

Le signal de sortie du détecteur 8 est appliqué à l'entrée 9a de commande de chargement d'un compteur 9 de N bits dont le contenu représente la valeur instantanée des angles $\alpha$ et $\beta$ ($\alpha = \beta$) situées entre $-\pi$ et $+\pi$. Le compteur 9 est connecté à une base de temps 10 fournissant un signal d'horloge CLK sur une entrée 9b du compteur.

Ce dernier comporte également une entrée de chargement 9c sur laquelle peut être appliqué un signal binaire sur N bits en parallèle représentant la valeur de l'angle de phase $\alpha_{np}$.

L'entrée 9c du compteur 9 est connectée, par l'intermédiaire d'un bus 11 de largeur N, à la sortie de données 12a d'une mémoire ROM 12 qui constitue une table de valeurs d'angles de phase.

La mémoire ROM 12 comporte également une entrée d'adresse 12b qui est connectée, par l'intermédiaire d'un bus 13 de largeur N, à la sortie 9d du compteur d'angle de phase 9.

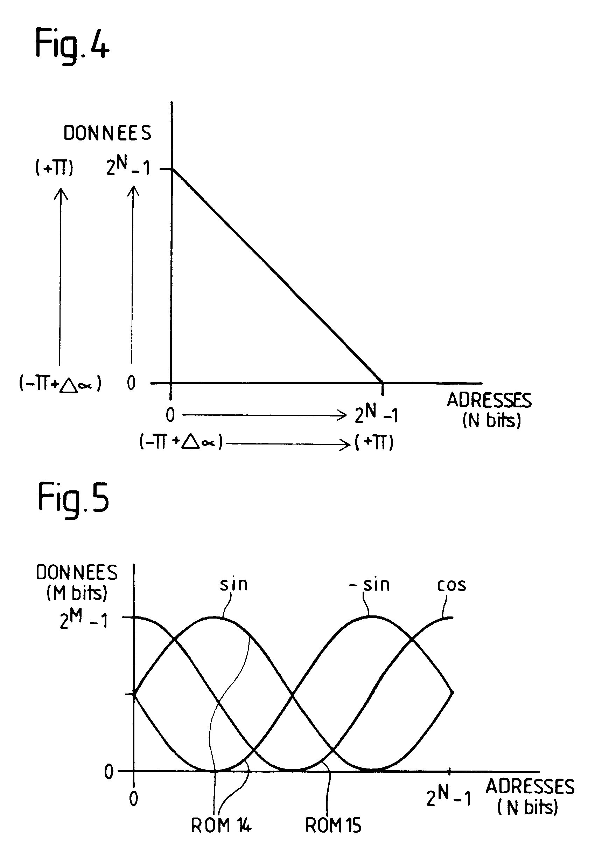

En d'autres termes, la mémoire ROM peut être adressée avec $2^N$ valeurs binaires (256 par exemple, si N=8) situées entre 0 et $2^N$-1 correspondant à autant de valeurs de l'angle $\alpha$ entre $-\pi+\Delta\alpha$ et $+\pi$, où $\Delta\alpha$ correspond à l'incrément de la phase entre deux adresses suivantes (voir la figure 4).

A chacune de ces valeurs d'adresse correspond une valeur de donnée située entre 0 et $2^N$-1 correspondant à autant de nouvelles valeurs de $\alpha$ et $\beta$ situées entre $-\pi+\Delta\alpha$ et $+\pi$.

L'incrément $\Delta\alpha$ est égal à

$$\Delta\alpha = \frac{2\pi}{2^N} = \pi 2^{-N+1}$$

Par conséquent, la mémoire ROM 12 matérialise la fonction $\alpha_{np} = -\alpha_{na}$.

Il est à noter que la mémoire ROM 12 peut être remplacée par tout autre montage réalisant l'inversion du signe de l'angle $\alpha$ momentané. Par exemple, l'on pourrait imaginer un jeu de N inverseurs convenablement connectés ensemble. Un tel montage n'a pas à être décrit en détail ici, sa construction étant à la portée de l'homme de métier.

Ainsi, en l'absence de transitions du signal d'entrée D(t) sur l'entrée 7 du générateur 6, le contenu du compteur 9 croît progressivement de 0 à $2^N$-1 représentant un accroissement par échelons de $\Delta\alpha$ entre $-\pi+\Delta\alpha$ et $+\pi$, au rythme du signal d'horloge CLK. Lorsque la valeur $+\pi$ est atteinte, le compteur 9 passe de nouveau à la valeur $-\pi+\Delta\alpha$ au coup d'horloge suivant.

Le bus 13 est également raccordé à deux autres mémoires ROM 14 et 15 par l'intermédiaire de leurs entrées d'adresse 14a et 15a.

Le contenu des ROM 14 et 15 est symbolisé sur la figure 5. Les adresses de chacune des mémoires évoluent entre les valeurs d'angle $-\pi+\Delta\alpha$ et $+\pi$ avec un incrément égal à $\Delta\alpha$ correspondant à la sortie du compteur 9.

Les valeurs d'adresse évoluent entre 0 et $2^N$-1.

Les données correspondant à ces adresses diffèrent les unes des autres dans les mémoires ROM 14 et 15.

Dans la mémoire 14 sont stockées $2^{N+1}$ mots binaires de M bits dont les valeurs représentent respectivement le sinus et le moins sinus évoluant entre -1 et +1 et qui sont adressables en fonction des valeurs de l'angle $\alpha$ appliquées à l'entrée 14a. Le nombre M peut être égal à ou différent de N.

Comme le représente la figure 2, le signal d'entrée D(t) est appliqué par l'intermédiaire de l'entrée 7 à une entrée 14c de commande de groupe de données de la mémoire ROM 14. En effet, cette mémoire comporte un groupe de données représentant la fonction sinus et un autre groupe représentent la fonction moins sinus, conformément à ce qui est représenté à la figure 5. Ces groupes sont adressés respectivement à partir du moment où le signal D(t) présente une valeur positive ou négative.

Dans la mémoire 15 sont stockées $2^N$ mots binaires de M bits dont les valeurs représentent l'évolution du cosinus entre -1 et +1 (voir figure 4), ces mots binaires étant adressables respectivement en fonction de la valeur de l'angle $\alpha$ contenue dans le compteur 9.

Les sorties 14b et 15b des mémoires 14 et 15 sont donc des mots binaires de M bits représentant les valeurs d'un sinus et d'un cosinus en fonction des angles $\alpha$ et $\beta$ qu'il suffit d'appliquer à des convertisseurs numériques/analogiques respectifs 16 et 17 par l'intermédiaire de bus 18 et 19 respectifs, pour obtenir les signaux I(t) et Q(t) ayant la forme voulue.

La fréquence $\Delta f$ de ces signaux dépendra d'une part de la fréquence $f_{ck}$ de l'horloge 10, appliquée au compteur 9 et d'autre part du nombre de bits N de ce dernier. En d'autres termes:

$$\Delta f = \frac{f_{ck}}{2^N}$$

Si le nombre de bits du compteur 9 est égale à 8 , alors $\Delta f = f_{ck}/256$.

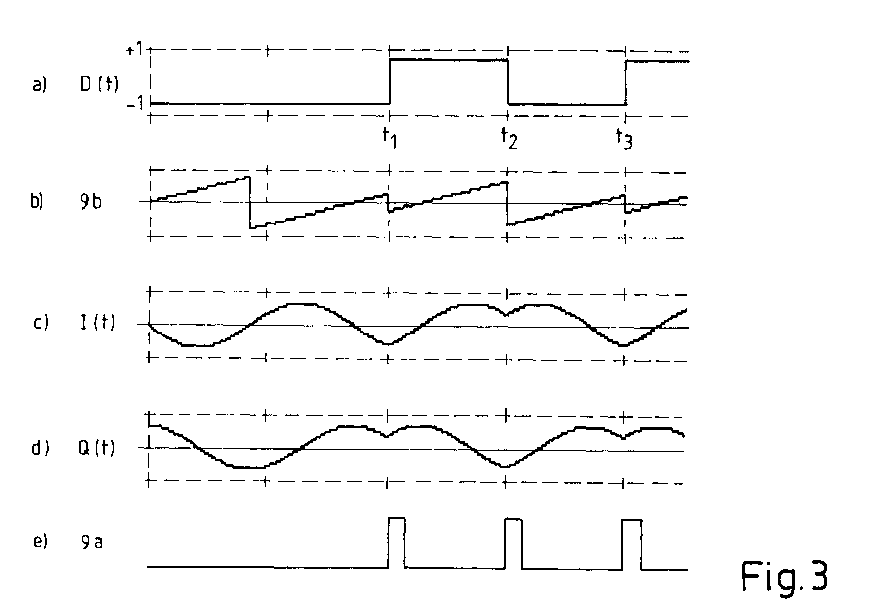

Le fonctionnement du modulateur de la figure 2 sera maintenant décrit à l'aide du diagramme de formes d'ondes de la figure 3.

Tant qu'il n'y pas de transition du signal d'information binaire D(t), c'est-à-dire dans l'exemple de la figure 3 jusqu'au temps $t_1$ (courbe a), le contenu du compteur 9 croît périodiquement de 0 à sa valeur maximale $2^N$-1 sous l'action du signal d'horloge qui lui est appliqué par l'entrée 9b (courbe b). Chaque pas du compteur 9 correspond à la recherche dans les mémoires 14 et 15 d'une valeur de sinus et cosinus de telle manière que les convertisseurs 16 et 17 puissent produire les courbes correspondantes sinusoïdale et cosinusoïdale des signaux I(t) et Q(t), respectivement (courbes c et d).

Simultanément, la valeur de l'angle $\alpha$ correspondant à la position actuelle du compteur 9 est appliquée en tant qu'adresse à la mémoire ROM 12 qui fournit à sa sortie de données chaque fois la valeur négative de cet angle $\alpha$.

Cependant, en l'absence de transition du signal d'information D(t), cette valeur négative est inopérante.

Lorsqu'au temps $t_1$, une transition intervient (dans l'exemple de la figure 3, celle-ci va de -1 à +1, courbe a), l'entrée 9a du compteur 9 est activée par le détecteur de flanc 8 et la donnée $(-\alpha)$ élaborée à ce moment par la mémoire ROM 12 est chargée dans le compteur 9 en effaçant son contenu précédent.

Simultanément, le signal d'information D(t) appliqué à la mémoire ROM 14 provoque l'application au convertisseur 16 de la valeur de sinus correspondant à la table dans la mémoire ROM 14 représentant la courbe sinusoïdale de signe opposé à celui de la courbe contenue dans la table de cette mémoire qui était consultée juste avant la transition du signal D(t).

On voit que, dans ces conditions, le signal I(t) ne présente pas de discontinuité.

Il en est de même pour ce qui concerne le signal Q(t) (courbe d, figure 3), car la valeur de l'angle -$\alpha$ issue du compteur 9 correspondra dans la table de la mémoire 15 à une même valeur cosinusoïdale qui est appliquée pour cette mémoire au convertisseur 17.

Lorsqu'au temps $t_2$, une transition inverse se produit dans le signal D(t), le processus est le même à cette particularité près que la mémoire ROM 14 sera maintenant conditionnée pour fournir, à l'aide de l'adresse représentant l'angle $\alpha$, une donnée cherchée dans la table sinusoïdale dont la courbe est de signe opposé que précédemment.

De nouveau, ni le signal I(t), ni le signal Q(t) ne présente alors une discontinuité.

La figure 3 ne montre qu'un exemple des formes d'ondes pouvant être présentes dans le modulateur. Le même processus décrit ci-dessus se déroulera quel que soit le moment où intervient une transition dans le signal D(t) par rapport à l'échelle des temps déterminés par la base de temps 10.

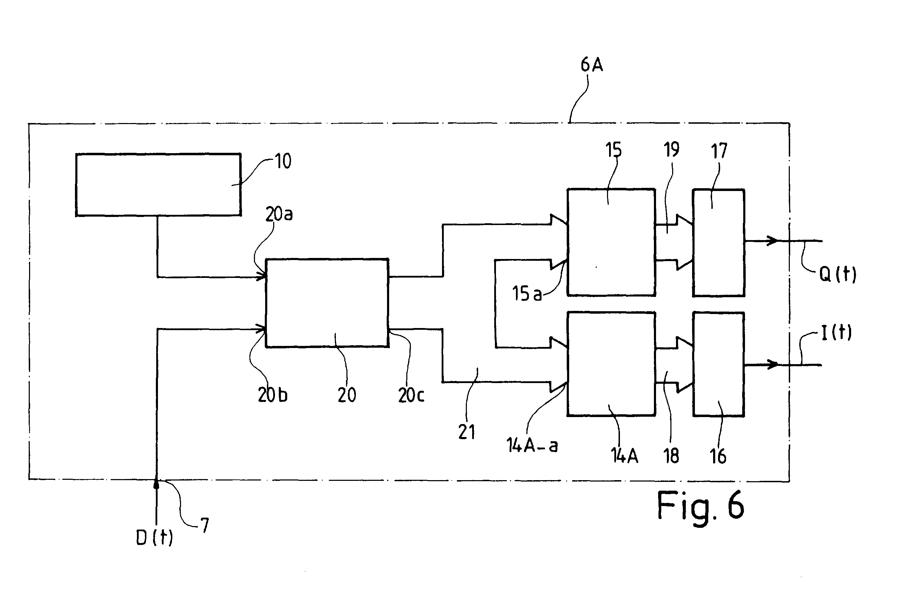

On va maintenant se référer à la figure 6 qui représente un second mode de réalisation numérique suivant l'invention, la figure ne représentant que le deuxième générateur des signaux de modulation I(t) et Q(t).

Ce générateur indiqué par la référence générale 6A, comprend les composants 10, 15, et 16 à 19 déjà décrit à propos de la figure 2, le compteur 9 ainsi que la mémoire ROM 12 du mode de réalisation de cette figure 2 étant remplacés par un compteur/décompteur 20

Le compteur/décompteur 20 comprend une entrée d'horloge 20a qui est raccordée à l'horloge 10. Une autre entrée 20b constitue sa borne de commande de comptage/décomptage.

Le compteur/décompteur 20 comprend également une sortie 20c raccordée en parallèle, par l'intermédiaire d'un bus sur N bits 21 à l'entrée 15a de la mémoire 15 et également à l'entrée 14A-a d'une mémoire 14A qui, à la différence avec la mémoire 14 du mode de réalisation de la figure 2, ne comporte qu'une table +sinus.

Le compteur/ décompteur 20 réalise de façon inhérente la relation,

$$\frac{d\alpha}{dt} = D(t)2\pi\Delta f$$

c'est-à-dire les deux caractéristiques qui sont à la base de la présente invention, l'inversion du signe du sinus étant réalisée en inversant le sens du comptage par une commande appropriée de l'entrée 20b du compteur/décompteur 20. Cette inversion a pour effet que la relation de phase entre les signaux L(t) et Q(t) est modifiée en inversant le sens de variation de l'argument du sinus et du cosinus, ce qui revient au même résultat que celui obtenu par le premier mode de réalisation de l'invention décrit à propos de la figure 2.

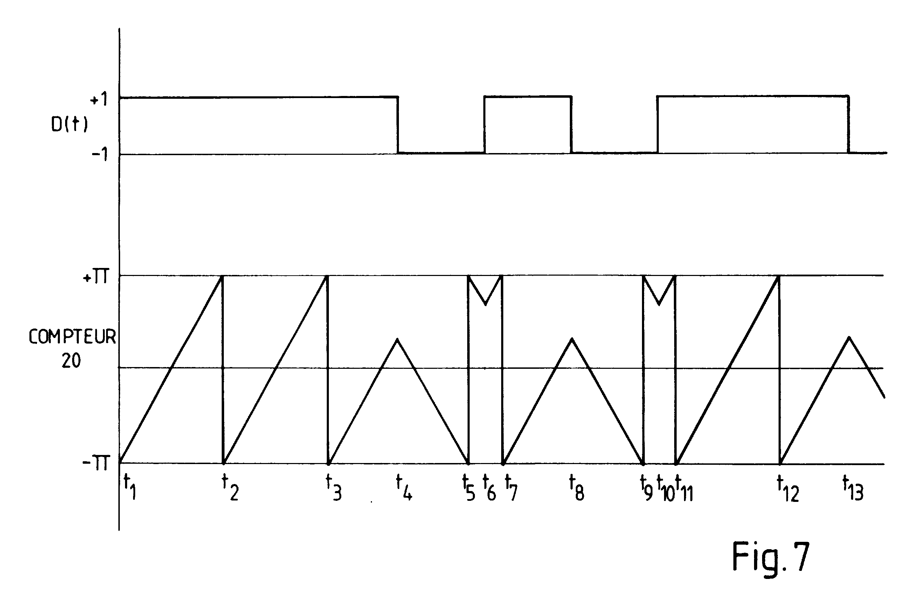

La figure 7 montre un exemple concret d'évolution du contenu du compteur 20 en fonction du signal utile D(t). La capacité du compteur 20 est égale à N bits, N étant égal 8, par exemple. Dans ces conditions, le compteur/décompteur peut compter de 0 à 255, représentant une plage de valeurs de l'angle $\alpha$ de -$\pi+\Delta\alpha$ à +$\pi$.

Le compteur/décompteur 20 est conçu de telle façon qu'il compte de 0 à 255 ou de 255 à 0, le sens de comptage étant déterminé par la valeur du signal utile D(t).

On remarquera donc qu'à la différence du compteur 9 de la figure 1, le compteur/décompteur 20 ne peut pas changer une nouvelle valeur, mais il peut changer le sens du comptage.

Comme représenté dans l'exemple de la figure 7, en l'absence de transitions, le compteur/décompteur 20 compte de 0 à 255 (respectivement entre $t_1$ et $t_2$ et entre $t_2$ et $t_3$ sur cette figure) au rythme de l'horloge 10, puis reprend la position zéro. Le sens du comptage peut être inverse (décomptage) si tel était le cas après la dernière apparition d'une transition du signal D(t).

Toujours dans l'exemple de la figure 7, au temps $t_4$, le signal D(t) passe de +1 à -1, en inversant le sens du comptage du compteur/décompteur 20. Par conséquent, son contenu va diminuer au rythme de l'horloge 10, jusqu'à atteindre la position zéro correspondant à la valeur $-\pi$ (instant $t_5$).

Au même instant, le compteur/décompteur 20 saute à la position haute de 255 et au coup d'horloge suivant, prend la valeur 254 etc. jusqu'à l'apparition, au temps $t_6$, d'une nouvelle transition (de -1 à +1) du signal utile D(t). Un processus analogue se déroule ensuite avec des sauts de position aux instants $t_7$, $t_9$, $t_{11}$ et $t_{12}$, et des inversions du sens de comptage aux instants $t_6$, $t_8$, $t_{10}$ et $t_{13}$.

A chaque coup d'horloge, les ROM 14A et 15 reçoivent ainsi une valeur numérique représentatif d'une valeur d'angle située entre $-\pi+\Delta\alpha$ et $+\pi$ qui permet d'adresser ces ROM sur des valeurs numériques correspondantes de sinus et de cosinus converties ensuite dans les convertisseurs numérique/analogique respectifs 16 et 17.

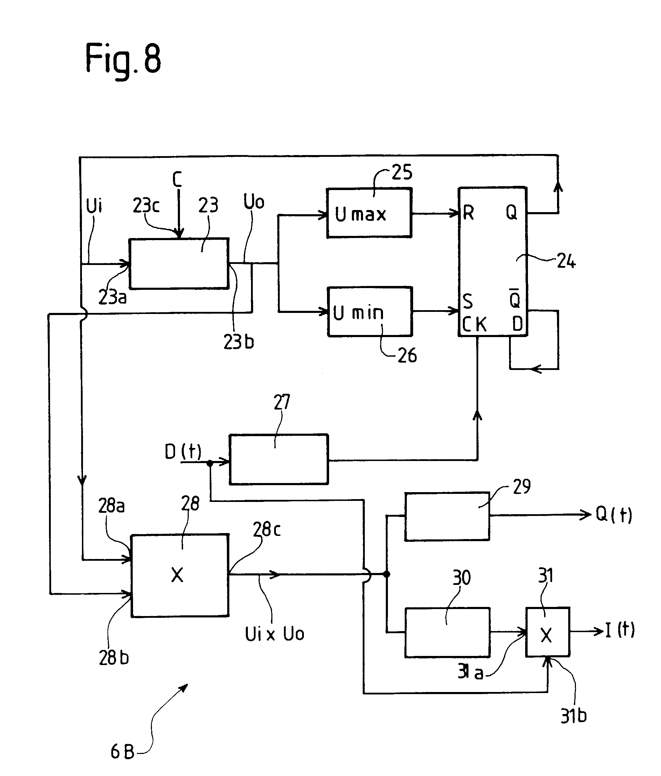

On va maintenant se référer à la figure 8 qui représente un troisième mode de réalisation selon l'invention, du deuxième générateur des signaux de modulation I(t) et Q(t). Ce troisième mode de réalisation porte la référence générale 6B et fonctionne essentiellement de façon analogique. Il s'insère dans le montage du modulateur selon l'invention de la même manière que les générateurs 6 et 6A des précédents modes de réalisation de l'invention.

Le générateur 6B comprend un intégrateur 23 qui reçoit sur son entrée 23a une tension Ui pouvant prendre une valeur haute +1 et une valeur basse -1 en fonction de la position d'un basculeur de type D 24 incorporé également dans ce montage. A partir de cette tension d'entrée Ui, l'intégrateur 23 engendre une tension de sortie Uo de la forme $U_o = C\int U_i dt$ essentiellement triangulaire apparaissant à la sortie 23b de l'intégrateur. Celui-ci comprend encore une entrée 23c à laquelle est appliqué un signal représentatif de la constante C.

Il est à noter que la constante C détermine la déviation de fréquence $\Delta f$ (figure 1) selon la relation

$$\Delta f = \frac{C}{U_{max} - U_{min}}$$

La sortie 23b de l'intégrateur 23 est appliquée en parallèle à deux comparateurs 25 et 26 qui sont chargés de fournir un signal de sortie respectivement lorsque le signal Uo atteint une valeur maximale Umax et une valeur minimale Umin entre lesquelles peut évaluer la tension Uo de l'intégrateur. Les sorties des comparateurs 25 et 26 sont appliquées respectivement aux entrées R et S du basculeur de type D 24.

Le générateur 6B comporte également un détecteur de flancs 27 auquel est appliqué le signal utile D(t) et dont la sortie est connectée à l'entrée CK du basculeur 24. La sortie $\overline{Q}$ de ce dernier est connectée à l'entrée D, tandis que la sortie Q est connectée à l'entrée 23a de l'intégrateur 23.

Une première entrée 28a d'un multiplicateur 28 est également connectée à la sortie Q du basculeur 24 et également à l'entrée 23a. L'autre entrée 28b du multiplicateur 28 est connectée à la sortie 23b de l'intégrateur 23, si bien que celui-ci effectue la multiplication UixUo, signal qui est présent à la sortie 28c.

Cette sortie 28c est connectée en parallèle à un générateur de cosinus 29 à la sortie duquel apparaît le signal Q(t), et à un générateur de sinus 30 dont la sortie est raccordée à la première entrée 31a d'un autre multiplicateur 31 dont l'autre entrée 31b est reliée à la borne recevant le signal D(t). La sortie 31c du multiplicateur 31 fournit le signal I(t).

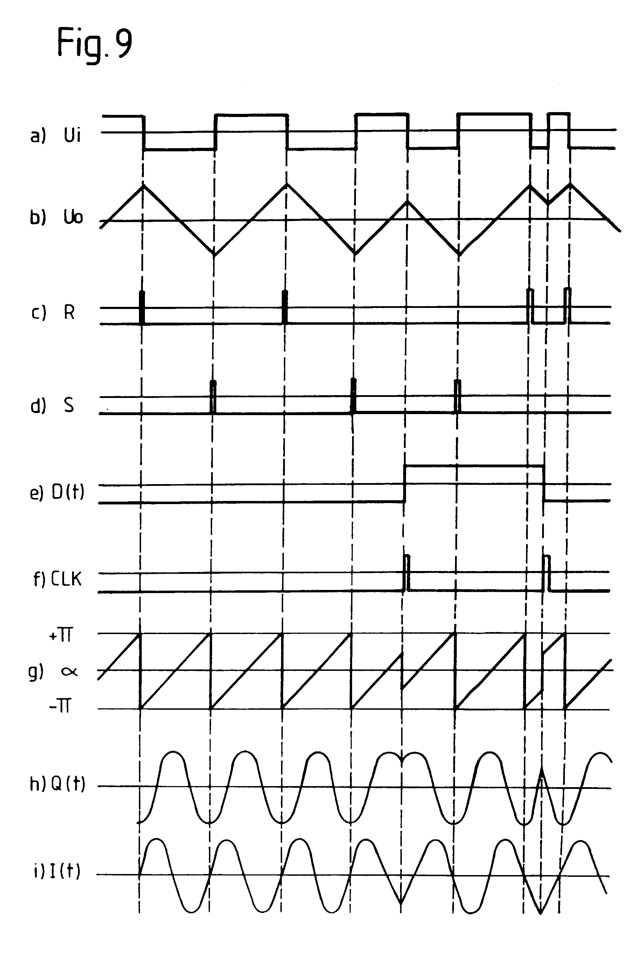

Le fonctionnement du générateur 6B que l'on vient de décrire apparaît sur la figure 9.

La tension Ui qui est engendrée à la sortie Q du basculeur 24 prend la valeur +1 ou -1, en fonction des signaux qui sont respectivement appliqués aux entrées R et S de ce basculeur 24 et ce indépendamment du signal qui lui est appliqué sur l'entrée CK (courbes a, c et d).

Les entrées R et S reçoivent respectivement les signaux de sortie des deux comparateurs 25 et 26, lorsque la tension de sortie de l'intégrateur 23 atteint sa valeur maximale ou minimale. Cette tension de sortie Uo est la forme intégrée de la tension Ui à savoir celle qui provient de la sortie Q du basculeur 24 (courbe b).

Au moment ou survient une transition du signal utile D(t) (courbe e), l'entrée CK du basculeur 24 reçoit une impulsion qui change la valeur binaire de la sortie Q du basculeur, ce qui a pour effet d'inverser le sens d'évolution de la tension Uo.

Les tensions Ui et Uo étant soumises à une opération de multiplication dans le multiplicateur 28, le signal de sortie de celui-ci (courbe g) fournit la valeur d'angle $\alpha = UixUo$ dont le signe reflète l'apparition des transitions du signal utile D(t). En d'autres termes, les composants 23 à 28 assurent l'inversion du signe de l'argument des signaux I(t) et Q(t).

Le signal à la sortie 28c du multiplicateur 28 commande les générateurs de cosinus et de sinus 29 et 30 Le signal de sortie du générateur de sinus 30 est multiplié par le signal D(t) dans le multiplicateur 31, opération qui assure le déphasage de $k\pi$ du signal sinus issu du générateur 30.

Il est à noter que, suivant une variante, le multiplicateur 31 peut également être placé avant le générateur de sinus 30.

Les signaux Q(t) et I(t) sont ainsi présents respectivement à la sortie du générateur 29 (courbe h) et à la sortie 31c du multiplicateur 31 (courbe i).

**Revendications**

1.  Modulateur destiné à être utilisé dans un émetteur d'un signal (y(t)) porteur de transmission d'information dans lequel l'information à transmettre (D(t)) se présente sous forme codée par déplacement de fréquence, ledit signal porteur étant centré sur une fréquence fictive $f_c$, de part et d'autre de laquelle sont respectivement émises deux fréquences réelles distantes de la fréquence centrale f d'une fréquence $\Delta f$, suivant que l'information binaire prend une valeur haute (+1) ou une valeur basse (-1), ledit modulateur comprenant:

    -   des premiers moyens générateurs (1) pour engendrer un premier signal porteur de la forme $\sin(2\pi f_c t)$ , et un second signal porteur de la forme $\cos(2\pi f_c t)$,
    -   des seconds moyens générateurs (6, 6A, 6B) pour engendrer, respectivement en fonction du niveau de l'information binaire à transmettre (D(t)), un premier signal de modulation I(t) de la forme $\sin(2\pi\Delta ft)$ et un second signal de modulation Q(t) de la forme $\cos(2\pi\Delta ft)$,
    -   des premier moyens de multiplication (4) pour mélanger le premier signal porteur et le premier signal de modulation,
    -   des seconds moyens de multiplication (3) pour mélanger le second signal porteur et le second signal de modulation, et
    -   des moyens (5) pour additionner les signaux de sortie desdits moyens de multiplication (3, 4) et engendrer ainsi ledit signal à transmettre (y(t)),
    -   ledit modulateur étant caractérisé en ce que lesdits seconds moyens générateurs (6, 6A, 6B) comprennent:
    -   des premier moyens de déphasage (8,14; 8,20; 31) pour, à chaque transition de ladite information binaire, modifier d'une valeur $k\pi$ la phase dudit premier signal de modulation (I(t)), k étant un nombre impair quelconque, et
    -   des second moyens de déphasage (8, 9, 10, 12; 8, 10, 20; 23 à 28) pour, simultanément à l'action desdits premiers moyens de déphasage et à chaque transition de ladite information binaire (D(t)), changer le signe des arguments desdits premier et second signaux de modulation (I(t), Q(t)).

2.  Modulateur suivant la revendication 1, caractérisé en ce que lesdits seconds moyens générateurs (6, 6A, 6B) comprennent

    -   des moyens (15, 17; 29,30) pour engendrer un signal cosinus,
    -   des moyens (14, 16; 14A, 16; 30) pour engendrer un signal sinus,
    -   des moyens (8, 9, 10, 12; 8, 10, 20; 23 à 28) pour engendrer un signal d'angle ($\alpha$) évoluant périodiquement entre une valeur $-\pi+\Delta\alpha$ et un valeur $+\pi$,
    -   des premiers moyens de commande (8, 14; 20; 31) pour, à l'apparition des transitions successives de ladite information binaire, changer le signe du signal produit par lesdits moyens pour engendrer ledit signal sinus, et
    -   des seconds moyens de commande (8,9, 12; 20; 23, 24, 28) pour, à l'apparition des transitions successives de ladite information binaire, changer le signe des arguments des signaux produits par lesdits moyens pour engendrer un signal d'angle.

3.  Modulateur suivant la revendication 2 caractérisé en ce que

    -   lesdits moyens pour engendrer ledit signal d'angle ($\alpha$) comprennent un compteur (9) et une horloge (10) connectée à ce compteur pour en faire croître périodiquement le contenu,
    -   la sortie (9d) dudit compteur (9) étant connectée en parallèle à deux mémoires ROM de manière à leur fournir des adresses représentant les valeurs dudit angle ($\alpha$), une première (15) desdites mémoires ROM formant lesdits moyens pour engendrer le signal cosinus et ladite deuxième mémoire ROM (14) formant lesdits moyens pour engendrer le signal sinus.

4.  Modulateur suivant la revendication 3 caractérisé en ce que ladite deuxième mémoire ROM (14) est chargée de valeurs plus sinus et de valeurs moins sinus, adressables sélectivement en fonction de la valeur binaire de ladite information binaire (D(t)), à l'aide des adresses élaborées par ledit compteur (9).

5.  Modulateur suivant la revendication 2, caractérisé en ce que

    -   lesdits moyens pour engendrer ledit signal d'angle ($\alpha$) comprennent un compteur/décompteur (20) et une horloge (10) pour en faire croître ou décroître périodiquement le contenu,
    -   ledit compteur/décompteur (20) étant connecté de manière à changer le sens de comptage à chaque apparition d'une transition de ladite information binaire (D(t)),

- ledit compteur/décompteur (20) étant en outre connecté parallèlement par sa sortie (20c) auxdits moyens (14A, 15) pour engendrer respectivement lesdits signaux de cosinus et de sinus.

6. Modulateur suivant la revendication 2, caractérisé en ce que

- lesdits moyens pour engendrer ledit signal d'angle ($\alpha$) comprennent un intégrateur (23), un circuit (24, 25, 26) pour appliquer à cet intégrateur un signal rectangulaire (Ui) dont les transitions reflètent, le cas échéant, celles de ladite information binaire (D(t)) et un multiplicateur (28) pour multiplier la sortie (Uo) dudit intégrateur avec ledit signal rectangulaire,
- la sortie dudit multiplicateur (28) étant connectée en parallèle auxdits moyens (29, 30) pour engendrer respectivement lesdits signaux de cosinus et de sinus,
- et en ce que lesdits moyens (30) pour engendrer le signal sinus sont connectés à un multiplicateur par la valeur binaire de ladite information binaire pour affecter la sortie de ces moyens (30) pour engendrer le signal sinus, d'un changement de signe lors des transitions de ladite information binaire (D(t)).

**Patentansprüche**

1. Modulator, bestimmt für die Verwendung in einem Sender für ein Trägersignal (y(t)) zur Informationsübertragung, in welchem die zu übertragende Information (D(t)) in durch Frequenzverschiebung kodierter Form erscheint, wobei das Trägersignal um eine fiktive Frequenz $f_c$ zentriert ist, beidseitig welcher zwei reale Frequenzen im Abstand einer Frequenz Af von der zentralen Frequenz $f_c$ emittiert werden, je nachdem, ob die binäre Information einen hohen Wert (+1) oder einen niedrigen Wert (-1) annimmt, wobei der Modulator umfaßt:

- erste Erzeugungsmittel (1), um ein erstes Trägersignal der Form $\sin(2\pi f_c t)$ und ein zweites Trägersignal der Form $\cos(2\pi f_c t)$ zu erzeugen,
- zweite Erzeugungsmittel (6, 6A, 6B), um, entsprechend dem Pegel der binären, zu übertragenden Information (D(t)), ein erstes Modulationssignal I(t) der Form $\sin(2\pi\Delta ft)$ bzw. ein zweites Modulationssignal Q(t) der Form $\cos(2\pi\Delta ft)$ zu erzeugen,
- erste Multiplikationsmittel (4), um das erste Trägersignal und das erste Modulationssignal zu vermischen,
- zweite Multiplikationsmittel (3), um das zweite Trägersignal und das zweite Modulationssignal zu vermischen, und
- Mittel (5), um die Ausgangssignale der Multiplikationsmittel (3, 4) zu addieren und so das zu übertragende Signal (y(t)) zu erzeugen,
- wobei der Modulator dadurch gekennzeichnet ist, daß die zweiten Erzeugungsmittel (6, 6A, 6B) umfassen:
- erste Mittel zur Phasenverschiebung (8,14; 8,20; 31), um bei jedem Übergang der binären Information die Phase des ersten Modulationssignals (I(t)) um einen Wert $k\pi$ zu ändern, wobei k irgendeine ungerade Zahl ist, und
- zweite Mittel zur Phasenverschiebung (8, 9, 10, 12; 8, 10, 20; 23 bis 28) um gleichzeitig mit der Tätigkeit der ersten Mittel zur Phasenverschiebung und bei jedem Übergang der binären Information (D(t)) das Vorzeichen der Argumente der ersten und zweiten Modulationssignale (I(t), Q(t)) zu wechseln.

2. Modulator nach Anspruch 1, dadurch gekennzeichnet, daß die zweiten Erzeugungsmittel (6, 6A, 6B) umfassen

- Mittel (15, 17; 29,30), um ein Kosinussignal zu erzeugen,
- Mittel (14, 16; 14A, 16; 30), um ein Sinussignal zu erzeugen,
- Mittel (8, 9, 19, 12; 8, 10, 20; 23 bis 28), um ein Signal eines sich periodisch zwischen einem Wert $-\pi+\Delta\alpha$ und einem Wert $+\pi$ ändernden Winkels ($\alpha$) zu erzeugen,
- erste Steuerungsmittel (8, 14; 20; 31), um bei aufeinanderfolgendem Erscheinen von Übergängen der binären Information das Vorzeichen des durch die Mittel zur Erzeugung des Sinussignals erzeugten Signals zu wechseln, und
- zweite Steuerungsmittel (8, 9, 12; 20; 23, 24, 28), um bei aufeinanderfolgendem Erscheinen von Übergängen der binären Information das Vorzeichen der Argumente der durch die Mittel zur Erzeugung eines Winkelsignals erzeugten Signale zu wechseln.

3. Modulator nach Anspruch 2, dadurch gekennzeichnet, daß

- die Mittel zur Erzeugung des Winkelsignals ($\alpha$) einen Zähler (9) und eine Uhr (10), die an den Zähler angekoppelt ist, um so periodisch den Inhalt anwachsen zu lassen, umfassen,
- der Ausgang (9d) des Zählers (9) parallel an zwei ROM-Speicher angekoppelt ist, so daß sie die den Werten des Winkels ($\alpha$) entsprechenden Adressen liefern, wobei ein erster (15) der ROM-Speicher die Mittel zur Erzeugung des Kosinussignals und der zweite ROM-Speicher (14) die Mittel zur Erzeugung des Sinussignals darstellt.

4. Modulator nach Anspruch 3, dadurch gekennzeichnet, daß der zweite ROM Speicher (14) mit Werten plus Sinus und Werten minus Sinus gefüllt ist, welche mit Hilfe von durch den Zähler (9) ausgearbeiteten Adressen selektiv als Funktion des binären Werts der binären Information (D(t)) adressierbar sind.

5. Modulator nach Anspruch 2, dadurch gekennzeichnet, daß

- die Mittel zur Erzeugung des Winkelsignals ($\alpha$) einen Zähler/Zwischenzähler (20) und eine Uhr (10), um den Inhalt periodisch zu- oder abnehmen zu lassen, umfassen,
- der Zähler/Zwischenzähler (20) so geschaltet ist, daß die Zählrichtung bei jedem Erscheinen eines Übergangs der binären Information (D(t)) gewechselt wird,
- der Zähler/Zwischenzähler (20) zusätzlich parallel an den Ausgang (20c) der Mittel (14A, 15) zur Erzeugung der Sinus- bzw. Kosinussignale angekoppelt ist.

6. Modulator nach Anspruch 2, dadurch gekennzeichnet, daß

- die Mittel zur Erzeugung des Winkelsignals ($\alpha$) einen Integrator (23), einen Schaltkreis (24, 25, 26), um an den Integrator ein Rechtecksignal (Ui) aus spiegelbildlichen Übergängen, gegebenenfalls denen der binären Information (D(t)), anzulegen, und einen Multiplikator (28), um den Ausgang (Uo) des Integrators mit dem Rechtecksignal zu multiplizieren, umfassen,
- der Ausgang des Multiplikators (28) parallel an die Mittel (29, 30) zur Erzeugung der Kosinus- bzw. Sinussignale angekoppelt ist,
- und dadurch, daß die Mittel (30) zur Erzeugung des Sinussignals an einen Multiplikator mit dem Binärwert der binären Information verbunden sind, um dem Ausgang dieser Mittel (30) zur Erzeugung des Sinussignals eine Vorzeichenänderung während des Übergangs der binären Information (D(t)) zu verleihen.

## Claims

1. Modulator intended for use in a transmitter of an information transmission carrier signal (y(t)) in which the information to be transmitted (D(t)) is in the form of frequency shift keyed code, said carrier signal being centred on a fictionnal frequency $f_c$, on either side of which are respectively emitted two real frequencies separated from the central frequency $f_c$ by a frequency $\Delta f$, according to whether the binary information has a high value (+1) or a low value (-1), said modulator comprising:

- first generator means (1) for creating a first carrier signal of form $\sin(2\pi f_c t)$, and a second carrier signal of the form $\cos(2\pi f_c t)$,
- second generator means (6,6A,6B) for creating, respectively as a function of the level of the binary information to transmit (D(t)), a first modulation signal (I(t)) of the form $\sin(2\pi \Delta f t)$ and a second modulation signal (Q(t)) of the form $\cos(2\pi \Delta f t)$,
- first multiplication means (4) for mixing the first carrier signal and the first modulation signal,
- second multiplication means (3) for mixing the second carrier signal and the second modulation signal, and
- means (5) for adding the output signals of said multiplication means (3,4) and thus creating said signal to be transmitted (y(t)),
- said modulator being characterized in that said second generator means (6,6A,6B) comprise :
- first phase shifting means (8,14;8,20;31) for, at each transition of said binary information, modifying by a value $k\pi$ the phase of said first modulation signal (I(t)), k being any odd number, and
- second phase shifting means (8,9,10,12;8,10,20;23 to 28) for, simultaneously with the action of said first phase shifting means and at each transition of said binary information (D(t)), changing the sign of said arguments of said first and second modulation signals (I(t), Q(t)).

2. Modulator according to claim 1, characterized in that said second generator means (6,6A,6B) comprise

- means (15,17;29,30) for creating a cosine signal,
- means (14,16;14A,16;30) for creating a sine signal,
- means (8,9,10,12;8,10,20;23 to 28) for creating an angle signal ($\alpha$) periodically evolving between a value -$\pi$+$\Delta\alpha$ and a value +$\pi$,
- first control means (8,14;20;31) for, at the occurrence of successive transitions of said binary information, changing the sign of the signal produced by said means for creating said sine signal, and
- second control means (8,9,12;30;23,24,28) for, at the occurrence of successive transitions of said binary information, changing the sign of the arguments of the signals produced by said means for creating an angular signal.

3. Modulator according to claim 2, characterized in that

- said means for creating said angular signal ($\alpha$) comprise a counter (9) and a clock (10) connected to said counter for periodically increasing the contents of said counter,
- the output (9d) of said counter (9) being connected in parallel to two ROM memories so as to provide them with addresses representing the values of said angle ($\alpha$), a first (15) of said ROM memories forming said means for creating the cosine signal and said second ROM memory (14) forming said means for creating the sine signal.

4. Modulator according to claim 3, characterized in that said second ROM memory (14) is stored with plus sine values and with minus sine values, selectively addressable as a function of the binary value of said binary information (D (t)), with the aid of the addresses elaborated by said counter (9).

5. Modulator according to claim 2, characterized in that

- said means for creating said angular signal ($\alpha$) comprise an up/down counter (20) and a clock (10) for periodically increasing or decreasing the contents,
- said up/down counter (20) being connected so as to change the direction of counting at each occurrence of a transition of said binary information (D(t)),
- said up/down counter (20) being further connected in parallel by its output (20c) to said means (14a,15) for creating respectively said cosine and sine signals.

6. Modulator according to claim 2, characterized in that

- said means for creating said angular signal ($\alpha$) comprise an integrator (23), a circuit (24,25,26) for applying to this integrator a rectangular signal (Ui) the transitions of which reflect, the case being, those of said binary information (D(t)), and a multiplier (28) for multiplying the output (Uo) of said integrator with said rectangular signal,
- the output of said mutliplier (28) being connected in parallel to said means (29,30) for creating respectively said cosine and sine signals,
- and in that said means (30) for creating the sine signal are connected to a multiplier, via the value of said binary information signal (D(t)) in order to create a sign change of the sine signal at transitions of said binary information signal (D(t)).

$y_h(t) = A \cdot \sin(2\pi f_h\, t)$

$y_b(t) = A \cdot \sin(2\pi f_b\, t)$

$t$

$t_{n+1}$

$t_n$

$p$

$a$

$D(t)$

$t_{n-1}$

$+1$

$-1$

$\nabla f$

$\nabla f$

$f_h$

$f_c$

$f_b$

$t$

Fig.1

Fig.2

a) D (t)

b) 9 b

c) I (t)

d) Q (t)

e) 9 a

Fig.3

EP 0 591 813 B1

# Fig.4

# Fig.5

Fig. 6

Fig.7

EP 0 591 813 B1

# Fig. 8

# Fig. 9

a) Ui

b) Uo

c) R

d) S

e) D(t)

f) CLK

g) ∝   +π

   −π

h) Q(t)

i) I(t)